# EUROPEAN PATENT APPLICATION

(11) **EP 0 825 766 A1**
(43) Date of publication of application: **25.02.1998**
(21) Application number: 95918159.5
(22) Date of filing: 10.05.1995
(51) Int. Cl.: H04N 5/225

(54) **VIDEO SIGNAL PROCESSOR AND OPTICAL IMAGE CONVERTER THEREFOR**

(71) Applicant: HITACHI, LTD., Chiyoda-ku, Tokyo 101 (JP)
(72) Inventor: KITADE, Takeshi, Chigasaki-shi, Kanagawa 253 (JP); AIZAWA, Iwao, Yokohama-shi, Kanagawa 244 (JP); IMAIDE, Takuya, Fujisawa-shi, Kanagawa 251 (JP); MATSUMURA, Toru, Fujisawa-shi, Kanagawa 251 (JP); KANADA, Naoya, Yokosuka-shi, Kanagawa 239 (JP)
(74) Representative: Altenburg, Udo, Dipl.-Phys.
(86) International application number: JP9500890
(87) International publication number: WO9636167

(57) **Abstract**

An object of the present invention is to provide a small-sized electronic camera in which a signal processing circuit of an electronic camera is housed in a space of a size equivalent to that of a 35 mm film can.

An imaging device 51 converts an optical image focused by a lens 2 into an electric video signal. The video signal is sent via a wiring in a substrate 50 to a cylindrical container 53 housed in the signal processing circuit. In the container 53, the video signal is compressed to be accumulated in a memory 29.

An electronic camera circuit is housed in the cylindrical container 53 having a size equivalent to that of a 35 mm film can and hence there can be implemented a small-sized electronic camera.

## Description

### TECHNICAL FIELD

The present invention relates to a image signal processor and an optical image conversion unit for the same in which a video signal is converted into a digital signal and is compressed to be recorded on a recording media.

### BACKGROUND ART

There have been recently offered various proposals for increasing functions of digital, still cameras employing recording media such as a flash memory, a memory of a PC card type, and a hard disk. One of such proposals has been made by the USP 5,040,068 in which a portion of the digital camera is fabricated as a unit such that the unit can be replaced in accordance with a purpose of use of the camera. Disclosed in this article is a technology in which there are employed units respectively including image sensor sections having mutually different values of resolution such that an object is shot with a desired value of resolution by replacing the unit. Furthermore, there has been also disclosed a technology in which there are provided color and monochrome imaging devices such that color and monochrome images can be obtained by replacing these imaging devices with each other.

However, in the conventional example above, description has not been given particularly of a technology of miniaturizing the system. Additionally, the conventional technology above has not been devised on the premise that optical cameras existing heretofore are utilized with the technology, namely, the designer is required to start designing of the system beginning with a housing thereof, which leads to a problem of increase in the development cost.

### DISCLOSURE OF INVENTION

It is therefore an object of the present invention to provide a camera in which an optical camera and an electronic camera can be commonly implemented.

To achieve the object above, a circuit section including a camera signal processing circuit, an image compressing circuit, a storage circuit, and the like necessary for an electronic camera is housed in a cylindrical portion having an external form defined by a diameter of about 25 millimeters (mm) of a 135-type film cartridge stipulated by JIS K 7519 and a height ranging from 37 mm to 47 mm, and the cylindrical unit is arranged in a location where a film of the so-called optical camera is mounted. Moreover, an imaging device fixedly disposed on a plate-like or planar portion is disposed on a plane on which a lens of the optical camera forms a focused image. Alternatively, a circuit section and an imaging device necessary for an electronic camera are housed in a container having a size substantially equal to a 110 film cartridge stipulated by JIS K 7563 such that the imaging device is placed on a plane on which a lens of the 110 film cartridge camera forms a focused image.

The cylindrical portion has an internal configuration in which several sheets of substrates are horizontally accumulated on a bottom surface thereof and the substrates are connected to each other via a signal line. Up to the present, the circuits other than the storage circuit are collected in several IC chips. The IC has at most several tens of pins and can be mounted on the substrate having a diameter of 25 mm. In addition, when the storage circuit to store therein compressed video signals is formed in one chip including, for example, an accumulated memory chip, it is possible for a memory having a small bottom area to provide a large storage capacity. The accumulation technology has been described, for example, in pages 69 to 75 of the "Electronic Design" published on Aug. 22, 1994 from the Penton Publication.

The imaging device is connected to the circuit section via a wiring in the planar substrate on which the imaging device is disposed.

In addition to the structure above, there are additionally provided other means such as a card-type memory, for example, a memory card or a hard disk according to the PCMCIA standard is adopted as the recording media for the compressed video signals. For this purpose, there is separately arranged a rear cover for an optical camera, the cover including a socket conforming to the PCMCIA standard. In most optical camera presently available in the market, the rear cover is fixed onto the system by a hinge using screws and can be easily released therefrom. Connecting the rear cover via a wiring to the circuit section, the compressed video signals can be recorded on a recording card.

According to the present invention, the light collected by the lens of the optical camera is focused onto a surface of the imaging device arranged in the image focusing plane. The imaging device converts the optical image into a video signal. The signal processing after this point is the known signal processing procedure of the prior art such that the video signal is compressed to be stored in a laminated memory having a large capacity or a recording card-type memory.

In accordance with the present invention, since the optical image converting section achieving the signal processing of the electronic camera is housed in a portion having a size of the 135-type film or 110 film cartridge, the system can be miniaturized.

According to the present invention, the optical image converting section can be inserted into a film portion of any optical camera for the existing 135-type film or 110 film cartridge. Therefore, when the optical image converting section is inserted into an existing optical camera, the optical camera can be used as an electronic camera without modifying the optical camera at all or by slightly modifying the optical camera. Consequently, since one camera can be utilized in two ways, i.e., as an optical camera and an electronic camera, the usability of the camera becomes expanded. Moreover, it is not necessary for the designer to design the electronic camera again beginning at the housing thereof, namely, the housing, lens section, shutter section, shutter control circuit section, finder section, and the like can be used without any modification. That is, when an electronic camera is desired to be implemented, only the optical image converting section is required to be designed and manufactured. In consequence, the development cost can be remarkably lowered.

### BRIEF DESCRIPTION OF DRAWINGS

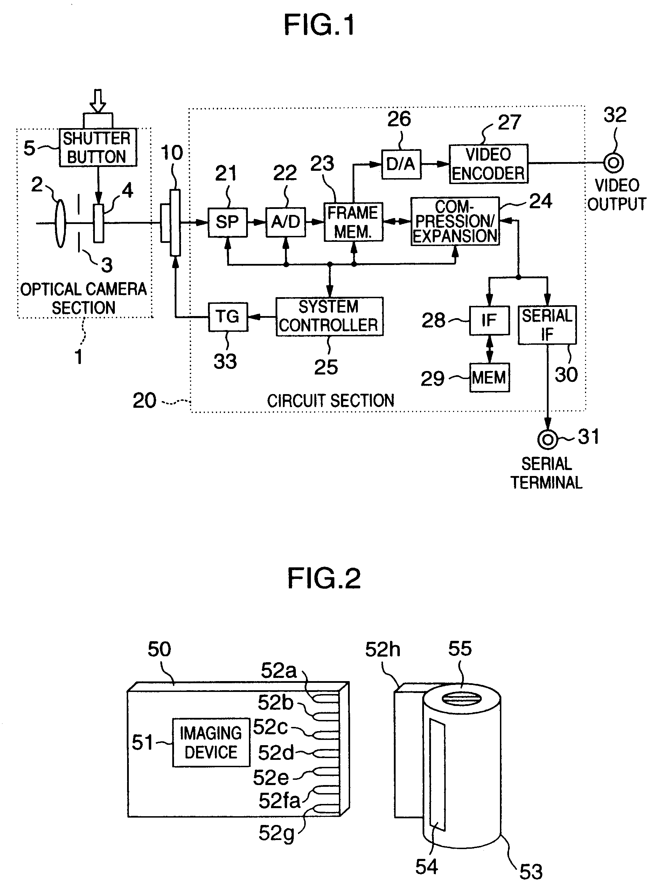

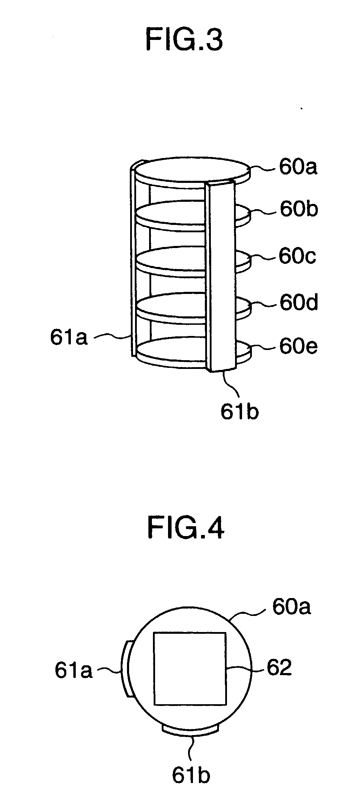

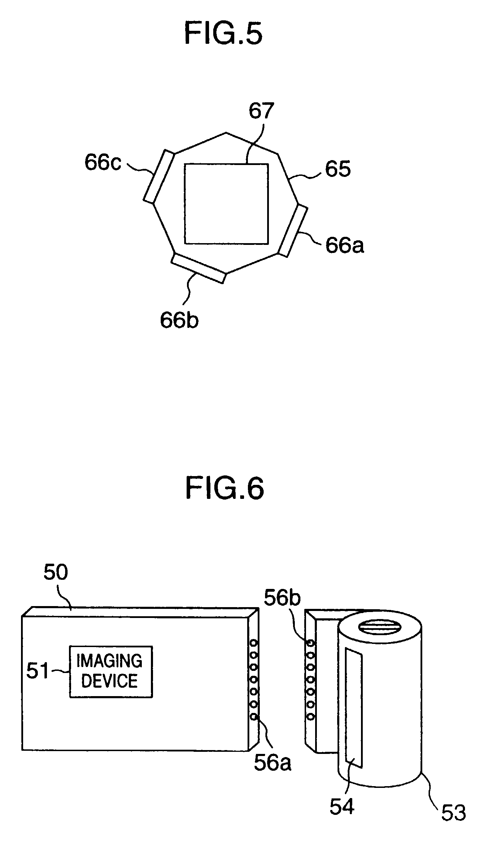

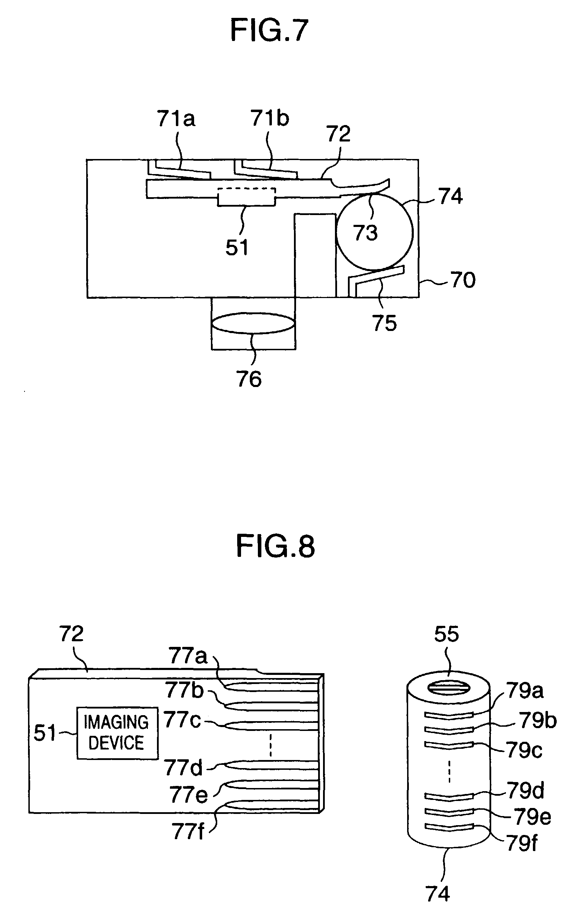

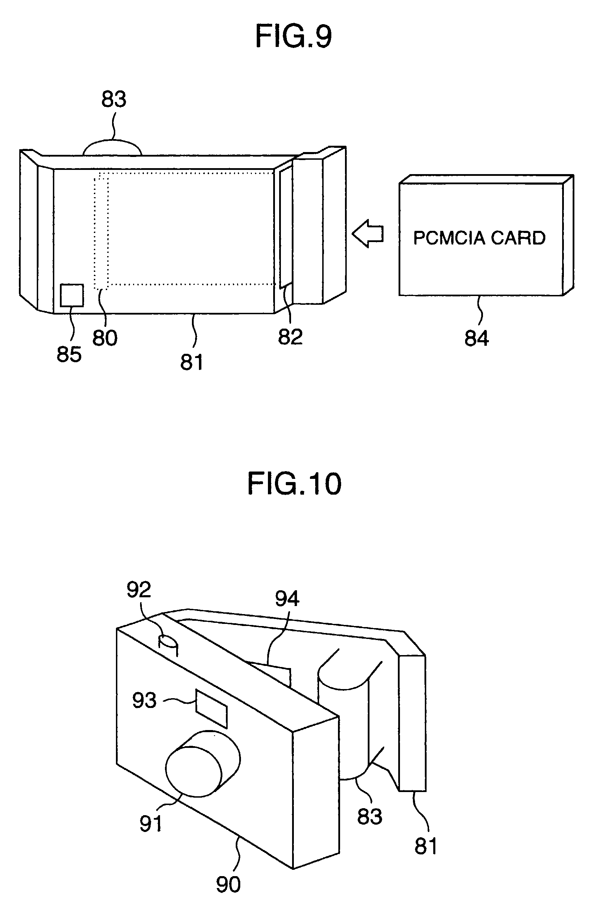

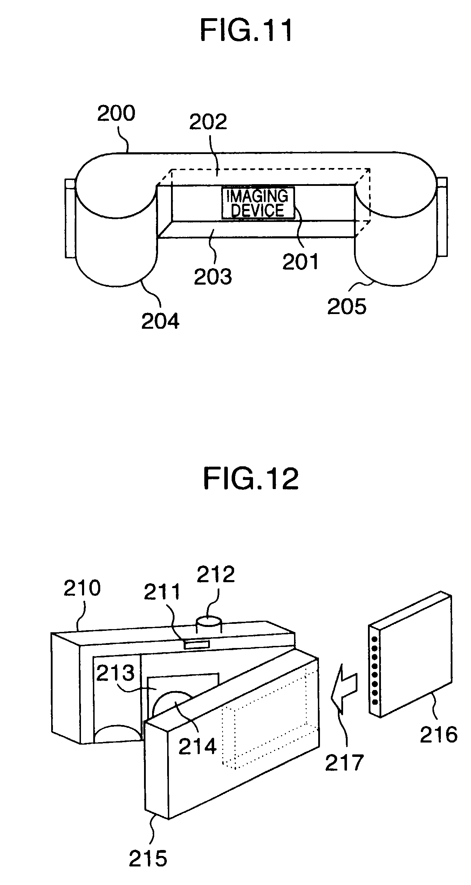

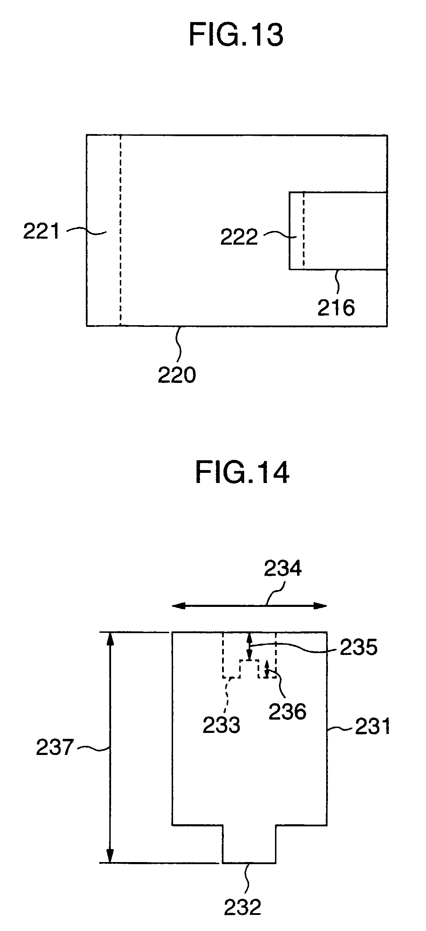

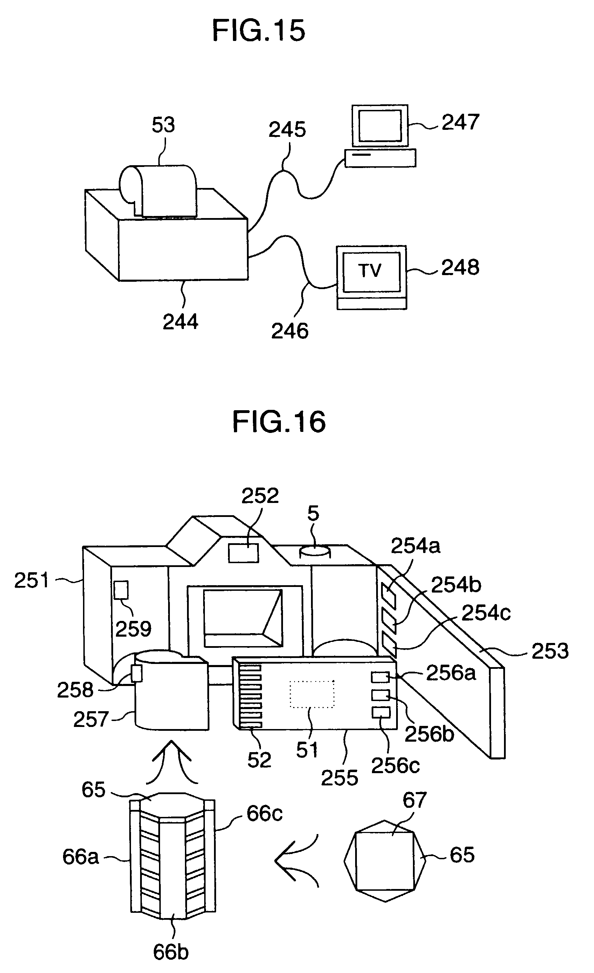

Fig. 1 is a block diagram showing an embodiment of the video signal processor according to the present invention. Fig. 2 is a diagram showing an example of an appearance of an optical image converter section in the embodiment shown in Fig. 1. Fig. 3 is a diagram showing an example of internal constitution of a cylindrical portion in the embodiment shown in Fig. 2. Fig. 4 is a diagram showing a top view of Fig. 3. Fig. 5 is a diagram showing another example of internal constitution of the cylindrical portion in the embodiment shown in Fig. 2. Fig. 6 is a diagram showing another example of an appearance of the optical image converter section in the embodiment shown in Fig. 1. Fig. 7 is an explanatory diagram for explaining connection between a plate-shape portion and a cylindrical portion. Fig. 8 is a diagram showing further another example of appearance of the optical image converter section in the embodiment shown in Fig. 1. Fig. 9 is a diagram showing a portion of an appearance of a second embodiment of the video signal processor according to the present invention. Fig. 10 is a diagram showing an example of the overall appearance of the embodiment shown in Fig. 9. Fig. 11 is a diagram showing a portion of an appearance of a third embodiment of the video signal processor according to the present invention. Fig. 12 is a diagram showing an example of the overall appearance of the embodiment shown in Fig. 11. Fig. 13 is a diagram showing associated elements of elements of the embodiment shown in Fig. 12. Fig. 14 is a diagram showing an appearance of a 135-type film cartridge stipulated by JIS K 7519. Fig. 15 is a diagram for explaining reproduction of the video signal processor according to the present invention. Fig. 16 is a diagram showing the overall appearance related to the appearance shown in Fig. 1.

### BEST MODES FOR CARRYING OUT THE INVENTION

Next, description will be given of an embodiment of the present invention by referring to the drawings.

Fig. 1 is a diagram showing the block construction of the video processor in a first embodiment according to the present invention and includes an optical camera section 1 as a title thereof, a lens 2, an iris 3, a shutter 4, a push button for the shutter, an imaging device 10, a circuit section 20 as a title of this section, a camera signal processing circuit 21, an analog/digital converter circuit 22, a frame memory 23, an image compressor and expander circuit 24, a system control circuit 25, a digital/analog converter circuit 26, a video encoder 27, an interface circuit 28, a flash memory 29, an interface circuit for serial communication 30, a terminal for serial interface 31, a video output terminal 32, and a timing generator 33.

Operation will now be described. An image of an object, now shown, is fed through the lens 3 such that the quantity of light thereof is adjusted by the iris to be sent to the shutter 4. The shutter 4 passes the light to the imaging device 10 at a shutter speed set under the system controller of the optical camera 1, not shown, in response to a signal from the shutter button 5. The light from the lens 2 is focused onto the imaging device 10. In association with the incident light to the optical camera, the process up to this point has been well known.

The imaging device 10 converts the incident optical image into an electric video signal. The electric video signal is sequentially read according to a read timing signal from the timing generator circuit 33 to be sent to the camera signal processor circuit 21. The processor circuit 21 is a known signal processor circuit for cameras and includes a gain control circuit, a gamma compensation circuit, and the like. After this point, the video signal is converted by the A/D converter circuit 22 into a digital circuit to be once accumulated in the frame memory 23.

The signal stored in the memory 23 is sent through a branching operation to the D/A converter circuit 26 to be restored into an analog signal such that the signal is converted by the video encoder into a video signal of, for example, the NTSC system suitable for a television monitor and is then delivered from the output terminal. Connecting the terminal 32 to a so-called electric view finder or a liquid crystal monitor, it is possible to monitor the image being shot.

The image compressor circuit 24 sequentially reads the video signal from the frame memory 23 and then compresses the video signal according to a predetermined format, for example, in a compression method stipulated by the JPEG standard. The compressed video signal is stored via the interface circuit 28 in the flash memory 29. Since a single flash memory chip has an upper limit of capacity, the flash memory 29 includes several memory chips accumulated on each other to increase the capacity. The technology for this purpose has been described, for example, in pages 69 to 75 of the "Electronic Design" published on Aug. 22, 1994 from the Penton Publication.

Alternatively, it may also be possible that the video signal compressed by the compressor circuit 24 is converted into a serial signal by the serial communication interface 30 to be delivered from the serial signal output terminal 31. Using the terminal 31, the main body including the optical camera 1 and the circuit section 20 can also be employed as a digital encoder for video signals.

In the reproduction, two input routes are available. The first route is a path from the memory and the second is a route via the serial terminal 31 from an external device. In both routes, in contrast with the recording operation, the signals are returned to the expander circuit 24. In the expander circuit 24, the compression method is determined for the input video signal to expand the signal in a method corresponding to the determined compression method such that the expanded signal is accumulated in the frame memory 23. The signals is then fed through the D/A converter 26 and the video encoder 27 as a video signal to the terminal 32.

Description has been given of one signal processing route. In the description, the A/D converter circuit 22 is arranged as a subsequent stage of the camera signal processor circuit 21 for simplicity of explanation. However, even when the A/D converter circuit 22 is disposed in the circuit 21, there does not arise any essential difference.

Description will now be given of synchronization between the shutter 4 and the read timing of the imaging device 10. The synchronization can be established, for example, as follows. A shutter trigger signal is acquired from the optical camera side and is supplied to the timing generator circuit 33 or the system control circuit 25. When the shutter timing is used in this fashion, it is necessary to provide an interface circuit on the optical camera side to output a signal, e.g., a shutter trigger signal in cooperation with the shutter section. Namely, on the side of the optical image converter, there is also required an interface circuit to input the signal from the camera side.

Another method takes advantage of a considerable increase in the quantity of light incident to the imaging device when the shutter 4 is opened. In the case of utilizing considerable increase in the quantity of light incident to the imaging device, an electronic camera can be implemented without modifying a conventional optical camera, which is different from the case using the shutter timing as above. In this case, there can be used a method to directly monitor the quantity of light incident to the imaging device. Or, there may be used the following method. It is general in the imaging device that electric charge remaining as video information on the device and electric charge having the opposite polarity with respect to that of the remaining electric charge are discharged from the imaging device. Monitoring a flow rate of the discharged electric charge, it can be detected in an indirect manner that light enters the imaging device.

Next, a method of achieving the operation be specifically described by referring to Figs. 2, 3, 4, and 16. Fig. 2 is a diagram showing an appearance of the optical image converter of the video signal processor according to the present invention. The converter includes a planar substrate 50 onto which an imaging device is fixed and which guarantees mechanical strength, an imaging device 50, signal terminals 52a to 52g, a socket 52 for engaging the terminals 52a to 52g, a cylindrical container 53 as the cylindrical portion, a portion 54 for indicating sensitivity of imaging device as equivalent value to a silver-halide photographic film, and a circular recess portion 55.

In this embodiment, the planar portion 50 forming the optical converter section is separated from the cylindrical portion 53 and there is disposed a connector section including the terminals and the socket for structural and electric connection therebetween. In a monoblock-form structure in which the planar portion 50 and the cylindrical portion 53 are formed in a block, the present invention of this application can be implemented without any problem. The optical converter section in the monoblock form requires, when acquiring the video signal stored in the circuit section, a terminal to output video signals therefrom. In consideration of the contour of the optical converter section, the output terminal is required to be provided, for example, in an upper surface of the cylindrical portion. However, as in the present embodiment, when the planar portion 50 is separated from the cylindrical portion 53, the terminal to acquire the video signal stored in the circuit section and the terminal to input the imaging signal from the imaging device can be arranged in the connector section or a connector terminal may be shared therebetween. Therefore, it is unnecessary to dispose the output terminal in an upper surface of the cylindrical portion. In the reproduction, the user is only required to remove only the cylindrical container 53 and to connect the container 53 to a reproducing unit via a terminal disposed in a space of the connector section. When compared with the monoblock form, only the cylindrical container 53 is used and hence the configuration is compact, which is convenient for the user.

The substrate 50 and the cylindrical container 53 are electrically and mechanically connected by inserting the terminals 52a to 52g in the socket 52h to be then mounted on an optical camera. The container 53 is arranged in a space for the film cartridge of an optical camera and the substrate 50 is placed on the rear side of the shutter on which the film drawn from the film container is loaded. The imaging device 51 of Fig. 2 corresponds to the imaging device 10 of Fig. 1, and the container 53 of Fig. 2 houses therein the circuit section 20 of Fig. 20. The imaging device 51 is fixed onto a surface of the substrate 50. When determining a corresponding optical camera, it is possible to fabricate the substrate 50 in a shape suitable for the camera so as to most suitably locate the imaging device 51 in the image focusing plane of the lens. When the surface of the imaging device 51 is substantially equal to the surface of the plate-shaped substrate 50 in the configuration, the imaging device 51 can be located at the most suitable position in the image focusing plane of the lens. This is because the state in which the film is inserted therein can be easily established.

To guarantee the mechanical strength, it is only necessary that the substrate 50 has a thickness of about one millimeter. In general, an optical camera includes a plate spring on the side of its rear cover to push the film and hence there exists an elastic region of about 1 mm to about 2 mm. Since the elastic region is used for the insertion of the substrate 50, the rear cover can be appropriately closed.

Fig. 6 is a diagram showing an appearance of a second embodiment of the present invention, which is different from that shown in Fig. 2. The same components as those of Fig. 2 are assigned with the same reference numerals and will not be described. Reference numerals 56a and 56b respectively indicate a receptor side and a plug side of the connector.

The configuration differs from Fig. 2 in that a pin-type connector is provided for the connection between the substrate 50 and the container 53. In the diagram, only six connector pins are shown for simplicity of the drawing. Actually, there are used over ten pins as described in relation to Fig. 2.

Drawing signal lines and driving control lines from the imaging device 51, there are arranged wirings on and/or through the substrate up to the terminals 52a to 52h and 56a. As shown in Fig. 6, the terminals may be disposed in a plane other than the plane in which the imaging device 51 is arranged, namely, the terminal 56a is disposed on a side surface along the direction of thickness and the terminal 56b is arranged at a position opposing to that of the terminal 56a.

However, as described above, the thickness of the substrate 50 is to be such that the substrate 50 is inserted in the space where the drawn film is loaded. Consequently, it is difficult to dispose the connectors within the thickness; moreover, for the thickness, it is also difficult to attain the sufficient strength for the connecting portion. Consequently, in this embodiment, the connectors 52a to 52g are arranged in the surface which is the same as or opposing to the surface onto which the imaging device is fixed. When the socket 52h is configured to cover the connectors 52a to 52g, the satisfactory strength is attained for the connecting section.

For example, in the case of an imaging device of an inter-line type, there are required a total of 14 lines including the signal and driving control lines, i.e., one line for output signals from the imaging device, four lines for the vertical driving of the imaging device, two lines for the horizontal driving thereof, and seven lines including the control lines such as a reset line as well as the bias and power supply lines. This can be easily implemented by disposing the seven terminals including the terminals 52a to 52g shown in Fig. 7 on the opposite side of the substrate. In this connection, although the substrate 50 has the total of 14 terminals because of the premise of the imaging device of the inter-line type, the number of terminals is not limited to 14 for the imaging device of another type. Since the connector 52h has a width equivalent to that of a 35 mm film, even when the terminals are disposed with a pitch of one millimeter, a maximum of 17 terminals can be easily arranged on each surface. Therefore, even when an imaging device of a type other than that of this embodiment is used, the connection can be established for the substrate 50 and the socket 52h without any problem.

The cylindrical container 53 is of such a size that the container 53 can be installed in a portion in which the 135-type film cartridge is housed. As shown in Fig. 14, the 135-type film cartridge has a diameter of about 25 mm and hence the cylindrical container 53 can also be installed in the portion when the cylindrical container 53 has a diameter of about 25 mm. In addition, moreover, when the cylindrical container 53 has a maximum height of 47 mm, the container 53 can be installed in the portion. However, in general, an optical camera includes a rewinding portion to rewind the film and the portion cannot be released from the optical camera. Consequently, it is only necessary that the cylindrical container has a height of 37 mm or a recess 53 is beforehand disposed in a portion of the container where the rewinding portion to rewind the film is brought into contact with the container. The recess 53 is disposed in the upper surface of the cylindrical container. When the recess 53 has a diameter of about 11.5 mm and a depth of about 7.2 mm, the container is not brought into contact with the rewinding portion to rewind the film. When it is desired to increase the internal space of the cylindrical container 53, it is necessary to conduct a slight modification on the camera side. When the rewinding portion to rewind the film is configured to be expandable and contractible so that the portion rises when a pressure is applied thereto, the recess 53 is not required to be disposed and hence the internal space of the cylindrical container 53 can be increased.

On a 35 mm film, there is ordinarily indicated sensitivity thereof such that the camera can most favorably conduct the shooting operation by reading the indication. Also in the electronic camera of the present invention of this application, when the indication field 54 is disposed at a predetermined position, the camera can recognize sensitivity of the film in association with the optical converter section and hence the shooting can be conducted in the most favorable state.

Since the substrate 50 is to be freely replaced, a cover can be disposed for the imaging device to guard the imaging device of the removed substrate 50 and to prevent dust from fixing onto the imaging device. Additionally, since the rear cover can be freely opened and closed, the cover is also used to prevent dust and the like from fixing onto the imaging device. The cover is configured such that when the optical camera is mounted on the substrate, the cover is automatically opened.

Referring to Figs. 3 and 14, description will be given of an embodiment in which the circuit section 20 of Fig. 1 is installed in the container 53 of Fig. 2.

Fig. 14 is a diagram showing a 35 mm film can and includes a cartridge 131, a long hub 132, a short hub 133 as a recess in the cartridge, a diameter 134 of cartridge 131, a distance 135 between an upper edge surface of the cartridge to a protrusion in the short hub, a height 136 of the projection in the short hub, and a distance 137 from the upper edge surface of the cartridge to a lower edge surface of the short hub 132.

In accordance with JIS K7519 "135-Type Film Cartridge", the diameter 134 of the cartridge 13 is about 25, the height 137 is about 47, the depth 135 to the protrusion in the short hub is at most 7.2. The height 136 of the projection has not been particularly described. However, according to results of actual measurement of the cartridge, the depth relative to the upper edge surface of the short hub is about 15. Consequently, in the cylindrical container 53, the height of the container 53 may be set to 47. however, the available zone for the diameter of 25 therein is obtained by subtracting 15 from the height 137 (47), namely, 37.

Referring next to Fig. 3, description will be given of a method of specifically configuring the internal structure of the cylindrical container 53 according to the numeric values above.

In Fig. 3, there are included circular substrates 60a to 60e each having a diameter of about 24 mm and supports 61a and 61b which hold the circular substrates and which are disposed to communicate electric signals. The thickness of the outer wall of the container 53 itself is negligible. However, assuming the thickness of each of the supports 51a and 51b to be 0.5 mm, the diameter of each of the substrates 60a to 60e is about 24.

The circuit section 20 of Fig. 1 can be configured with, for example, at most eight LSIs available in the market. When at most eight LSIs are used, it is possible to mount the LSIs on both surfaces of four substrates. The system controller 25 is in the form of a large LSI. For the controller, there can be adopted, for example, the Hitachi's single chip microcomputer H8/3042 series. According to the "H8/3042 Series Hardware Manual (1993)" published from the Hitachi Ltd., the microcomputer is in the form of a 100-pin flat package and the size of mold portion is 14 and the maximum size of one edge is 16 including the edges and the leads.

Fig. 4 is a schematic diagram showing an LSI mounted on the substrate 60a. Reference numeral 62 indicates an LSI. Each edge of the inscribed square in the disk having a diameter of 24 has a length of 17.0. The microcomputer H8/3042 series of which the edge has a length of 16 or less can be mounted on the disk 60a with a sufficient wiring area. When there is required an LSI larger than the LSI above, it is only necessary to miniaturize the LSI package, for example, by hermetically installing the semiconductor chip in a package such as a ball-grid array. A circuit configuration employing bear chips is also available means.

The remaining one of the five disks is used to mount thereon discrete devices such as an output driver of the signal processor circuit 21 and the video encoder 27. It is also possible to configure the camera signal processor circuit 21 and the video encoder 27 in one chip. In any cases, the components can be fully mounted on five substrates.

In the present state, the thickness of each substrate is 1 mm or less and the height of the LSI is 1.2 mm in practices. The highest component is an electrolytic capacitor having a height of 5 mm. Assume that each LSI requires such an electrolytic capacitor. It is possible to arrange the LSI on only one side of each substrate. Since each substrate has a thickness of 7.2 mm or less and hence five substrates has a thickness of 36 mm through a simple calculation, the specification of the height of 37 above is satisfied.

Although there can be considered various methods of configuring wirings in five substrates, when the memory 29 and the interface circuit 28 for which control lines are most required are arranged on both surfaces of one substrate, it is possible to minimize the wirings in the support members 61a and 62b. For other circuits, it is practical to form wirings along the flow of signals. Incidentally, although only two support members are shown in Fig. 3, the support members may be increased in association with the wirings.

Although the substrates shown in Figs. 3 and 4 have a circular shape, the substrate contour may be a regular octagon as shown in Fig. 5. Fig. 5 is an embodiment in which an LSI is mounted on a substrate having a shape other than that of Fig. 4. This example is different from that of Fig. 4 in that the substrate contour is changed from a circle to an octagon and the number of support members is three.

Reference numeral 65 indicates a regular octagonal substrate, 66a to 66c denote support members, and 67 is an LSI. Arranging the LSI such that each of the corners of LSI opposes to the every second vertex of the substrate 65, it is possible to mount a square in the regular octagon, the square having the largest size among the squares which can be drawn therein. Assume that the circle in which the substrate 65 including the support members shown in Fig. 5 has a diameter 25 and the support members 66a to 66c have a thickness of 0.5. Each edge of the LSI is then has a length of 17.0 or less. Therefore, an LSI of which the edge is 16.0 or less can be mounted on the substrate 65. For the circular substrate, a maximum available area can be expected when the substrate is installed in a circular container. However, when the shape of substrate is a regular octagon, the handling thereof is facilitated when compared with the circular substrate.

Either one of the support members a to c is linked with the connector 52h of Fig. 2. It is to be appreciated that the substrate 65 has a contour of a square, not an octagon.

It is also possible that there appears a film can having a different shape in future. The container 53 of Fig. 2 can be designed according to the shape. When the film can is smaller than the present 35 mm film can, the designing can be carried out in accordance with the small-shaped film can such that several circuits of the circuit section 20 are gathered in one LSI to minimize the circuit size.

In the description of Fig. 1, the control signals such as those related to the shutter trigger are obtained from the optical camera side. However, it may also possible to arrange, for example, a connector for the pertinent purpose on a bottom surface of the container 53; moreover, using the support members shown in Fig.5, a connector or a contact point other than the connector 52h may be disposed on a side surface of the container 53.

As above, according to the present embodiment, since the signal processor circuit portion can be collected in a container having a diameter equal to that of the 135-type film cartridge stipulated by JIS K 7519, an electronic camera can be configured together with the imaging device disposed in the focusing plane of the optical camera. A conventional camera can be operated as an electronic camera without any modification. Moreover, for example, when using the shutter trigger signal as described above, the electronic camera can be similarly implemented only by drawing several control lines from the optical camera, which leads to a considerable reduction of the development cost of the electronic camera. When disposing an interface on the camera side, it is only necessary to modify the electronic circuit. This is a simple modification and hence the development cost does not cause any problem also in this case. In other words, the housing, the shutter control circuit, and the finder required each time an electronic camera is implemented can be replaced with those of the optical camera, and hence the development cost is lowered. Moreover, since an electronic camera can be used only by inserting the circuit section and the imaging device section 4 in the film portion of the optical camera, the functions of both cameras can be realized with the same housing, which expands the usability.

Additionally, information of the date possessed by the optical camera can be acquired via the connector. For the optical film, the user must determine in the shooting operation whether or not the date is additionally required. In the electronic camera, the date is recorded as associated information of the recorded image. Consequently, there is also provided a convenient aspect that the user can select whether or not the date is presented at reproduction.

Fig. 15 is a diagram showing an embodiment of the present invention, the diagram showing a concept of the method of reproducing an image shot in the embodiment of Fig. 1.

Reference numeral 53 indicates a container having a size of the 35 mm film can including a circuit for an electronic camera and a memory to store therein images recorded, 244 denotes a reproducer dedicated to the container 53, 245 designates a serial cable, 246 is an analog video cable, 247 indicates a personal computer, and 248 denotes a television monitor.

As described in conjunction with Fig. 1, the circuit in the container 53 includes an expanding circuit for reproduction, and the like. The reproducer 244 includes a user interface, a connector for the container 53, a buffer for serial output signals, and an output buffer for analog video signals.

Fig. 7 is a diagram of a third embodiment of the present invention and shows an extracted view of allocation of constituent components.

The embodiment differs from the second embodiment shown in Figs. 2 to 6 in that the electric contact point between the substrate on which the imaging device is mounted and the cylindrical container is implemented by using a spring.

Numeral 51 indicates an imaging device, 70 denotes an optical camera housing, 71a and 71b designate plate springs to fix a film in a lens focusing plane, 73 designates a contact point, 74 represents a cylindrical container, 75 stands for a plate spring to push the container 74 onto the substrate, 75 indicates a plate spring, and 76 is an optical lens.

Fig. 7 is a diagram showing a rear cover of the camera housing in the closed state of the cover.

First, operation will be described. An image of an object of shooting is passed through the lens 76 such that the collected light is focused on a surface of the imaging device placed in the focusing plane. In the imaging device, the light is converted into an electric signal to be sent via the substrate 72 and the contact point 73 to the container 73 including the signal processor circuit. The signal processing after this point is the same as that described in relation to the embodiment of Fig. 1.

The substrate 72 is devised to increase elasticity in the neighborhood of the contact point 73 to improve contact with the container 74. On the other hand, the container 73 is also pushed by the plate spring 75 originally included in the optical camera to be brought into contact with the substrate 72 at the contact point 73 in a stable state. Additionally, the optical camera includes a viewing window section. When the surface of the imaging device 51 is configured to be in a plane in which the substrate 72 is arranged such that the substrate 72 opposes to the viewing window section, the surface of the imaging device can be easily located in the focusing plane of the lens.

Fig. 8 is a diagram of the substrate 72 and the container 74 shown in Fig. 7, the diagram showing a view taken from a view angle different from that of Fig. 7. The same components as those of Fig. 7 are assigned with the same reference numerals. Reference numerals 72a to 72f and 78a to 78f indicate signal terminals. Each terminal includes, to avoid insufficient contact due to positional shift, a contact surface elongated in the horizontal direction. In Fig. 8, the number of terminals are not explicitly shown for simplicity of the diagram. However, in the case of an imaging device of the inter-line type, 14 signal and control lines are required between the imaging device 51 and the signal processor circuit as described in conjunction with the embodiment of Fig. 1.

To increase tightness of contact at the contact point 73, there may be used the following method. That is, the substrate 72 is made of a complex material which has high rigidity in the neighborhood of the imaging device so that stress is not applied thereto and which has high flexibility in the neighborhood of the contact point 73.

Fig. 9 is a diagram showing another embodiment of the present invention, which is different from the embodiment shown in Figs. 2, 6, and 7. Fig. 9 differs from Figs. 2, 6, and 7 in that the imaging device and the circuit section are disposed on a member which is also used as the rear cover of the optical camera and a socket for a PC card is arranged on an outer side.

Numeral 80 indicates a PC card connector in the rear cover, 81 denotes a member also used as the rear cover of a camera, 82 designates a PC card insertion slit, 83 is a cylindrical container in which the electronic camera circuit is housed, 84 indicates a PC card, and 85 stands for a connector for serial transmission.

The rear cover 81 has a right edge linked by a hinge with an optical camera, not shown. The rear cover 81 is configured such that the cylindrical container 83 matches the film can housing portion in the optical camera when the cover 81 is closed. Furthermore, the card connector 80 is connected in the rear cover 81 to the circuit in the container 83.

In this configuration, in addition to the memory 29 shown in Fig. 1 as the memory of image shot by the camera, there can be used a general-purpose PC card as an auxiliary memory. Alternatively, the configuration may includes only the PC card 84 without using the memory 29.

Fig. 10 is a diagram of an appearance showing an example in which the embodiment of the present invention shown in Fig. 9 is installed in an optical camera. In this diagram, the same components as those of Fig. 9 are assigned with the same reference numerals and will not be described. Numeral 90 indicates an optical section of a film camera as a title thereof, 91 denotes a lens, 92 designates a shutter button, 93 stands for a viewfinder window, and 94 is an imaging device.

Although the diagram of this embodiment is related to a compact-type camera, it is to be understood that the embodiment is applicable to a camera of the single-lens reflex camera.

Fig. 11 is a diagram of an appearance partly showing still another embodiment according to the present invention. This embodiment differs from the embodiment above in that the imaging device is mounted in a container having a size substantially equal to that of the 110 film cartridge and the circuit section is installed in the container. Numeral 200 indicates a container having a size equal to that of the 110 film cartridge, 201 denotes an imaging device, 202 stands for a top surface of the cartridge, 203 indicates a bottom surface of the cartridge, and 204 and 205 designate side surfaces in the cartridge.

The dimensions of respective sections of the cartridge 200 are stipulated by JIS K7563 "Photography - 110 Size Cartridge - Dimensions", for example, the distance between the side surfaces 204 and 205 is 30.5. The top surface 202, bottom surface 203, and side surfaces 204 and 205 serve a function to fix the cartridge at a position in the camera, i.e., as a positioning guide.

An advantage of the embodiment is such that since the film size is small for the 110 camera, the imaging device has a size smaller than that of the imaging device applied to the 35 mm camera, which leads to reduction of the cost for the following reasons. When compared with the 35 mm film camera on the focusing plane of the film, the 110 camera is smaller in its size, it is possible to utilize imaging devices of the 1/2 and/or 1/3 inch size presently adopted in low-priced video cameras. When using these small-sized sensors, there is required, to match the size of the focusing plane with that of the imaging device, a so-called reducing optical system. In comparison with the first embodiment employing a 35 mm camera, since the original focusing plane has a smaller size, the reduction factor of the reducing optical system can be increased and the system can be miniaturized.

Fig. 12 is a diagram of appearance of a system in which the embodiment shown in Fig. 11 is applied to the 110 camera. Numeral 210 indicates an optical section of the 110 camera, 211 is an optical viewfinder, 212 denotes a shutter button, 213 designates one side of the cylindrical portion of the container having the size of a 110 film cartridge, 214 indicates one side of the cylindrical portion of the container having the size of a 110 film cartridge, 215 is a rear cover of the 110 camera, 216 denotes an attachable and removable small-sized memory card, and 217 indicates an inserting direction of the memory card 216. The rear cover 215 is configured such that a memory card 207 smaller in size than the PC card can be connected to an internal portion of the memory card 216.

Fig. 13 shows an interface adapter of a PCMCIA connector for the memory card 216 shown in Fig. 12. Numeral 220 indicates an appearance of the adapter, 221 denotes a PCMCIA connector, 222 designates a connector between the small-sized memory card and the adapter. If the card 216 can be connected via the adapter 220 to the general PC card connector, it will be possible that the embodiment of the present invention shown in Fig. 11 having little space includes only the attachable and removable small-sized memory card without using the flash memory in the container 20.

Fig. 16 is a diagram showing an overall appearance of an embodiment according to the present invention. In the diagram, the same components as shown in Figs. 1 to 15 are assigned with the same reference numerals and will not be described.

Numeral 251 is an optical camera housing, 252 denotes a finder, 253 denotes a rear cover, 254a to 254c indicate electrodes on the rear cover 253, 255 stands for a planar substrate, 256a to 256c denote electrodes on the planar substrate, 277 is a container, 258 represents a connector in an upper portion of the container 257, and 259 indicates a connector in a film housing portion of the optical camera.

The container 257 in which a circuit to compress and to record video signals therein is housed is electrically and structurally coupled via a connector 52 with the substrate 255. The container 257 is housed in a film housing space of the camera 251. The connectors 258 and 259 are then connected to each other.

When the rear cover 253 is closed in this state, the electrodes 254a to 254c are connected to the electrodes 256a to 256c.

When viewed from the camera side, the camera is connected via the connector 259 and the electrodes 256 to the imaging device and the circuit section. These connecting points may be used at the same time or either one thereof may be used. At the connecting points, there are communicated power, ground potential, and information such as calendar information.

## Claims

1. A video signal processor including an optical camera section including a lens, a shutter, and a button for the shutter and an optical image converter section for achieving a photo-electric conversion for an optical image attained from the optical camera section and memorizing an electric video signal generated through the conversion, characterized by comprising:
a planar member;
a cylindrical member having a diameter equivalent to that of a 135-type film cartridge stipulated by JIS K 7519 and a height ranging from 37 mm to 47 mm;
an imaging device including an imaging surface and being fixedly located on the planar member such that the imaging surface is positioned at a focusing plane of the lens, the device conducting a photo-electric conversion for the optical image and thereby generating an electric video signal; and
a circuit section housed in the cylindrical portion to be electrically connected to the imaging device fixed on the planar member, the section including a storage circuit for storing therein the video signal generated from the imaging device, wherein
the optical image converter section includes the planar member, the cylindrical member, the imaging device, and the circuit section.

2. A video signal processor according to Claim 1, characterized in that the planar member includes a portion opposing to a view window section of the optical camera section, the portion being pushed by a film pushing plate attached by use of a rear cover section of the optical camera section.

3. A video signal processor according to Claim 1, characterized in that:
the optical camera section includes an interface section for supplying signals to the optical image converter section;
the optical image converter section includes an interface section for inputting signals outputted from the optical camera section; and
the interface sections respectively of the optical camera section and the optical image converter section are electrically connected to each other.

4. An optical image converter for achieving a photo-electric conversion for an optical image and memorizing an electric video signal generated through the conversion, characterized by comprising:
a planar member;
a cylindrical member having a diameter equivalent to that of a 135-type film cartridge stipulated by JIS K 7519 and a height ranging from 37 mm to 47 mm;
an imaging device fixedly located on the planar member for conducting a photo-electric conversion for the optical image and thereby generating an electric video signal; and
a circuit section housed in the cylindrical portion to be electrically connected to the imaging device fixed on the planar member, the section including a storage circuit for storing therein the video signal generated from the imaging device.

5. An optical image converter according to Claim 4, characterized in that the cylindrical member includes a recessed portion in an upper surface, the recessed portion having a diameter of about 11.5 mm and a depth of about 7.2 mm.

6. An optical image converter according to Claim 4, characterized in that the circuit section includes a camera signal processing circuit for processing video signals generated from the imaging device.

7. An optical image converter according to Claim 4, characterized in that the circuit section includes a video compressing circuit for compressing the video signals and the storage circuit stores therein video signals compressed by the video compressing circuit.

8. An optical image converter according to Claim 4, characterized in that the imaging device includes an imaging surface which is substantially equal to an attaching plane of the planar member.

9. An optical image converter according to Claim 4, characterized by including connector means for establishing connection between the cylindrical member and the planar member, wherein the cylindrical member and the planar members can be structurally separated from each other.

10. An optical image converter according to Claim 4, characterized by including means for indicating information related to sensitivity of the imaging device, the means being disposed at a predetermined position on a surface of the cylindrical member.

11. An optical image converter according to Claim 4, characterized by including a cover for protecting the imaging device, the cover being opened when the planar member is installed at a predetermined position of the optical camera section.

12. An optical image converter according to Claim 4, characterized by including an interface for receiving, when the interface is combined with an optical camera section including a lens, a shutter, and a button for the shutter, signals outputted from the optical camera section.

13. A planar substrate, characterized by comprising:
an imaging device for achieving a photo-electric conversion for an optical image and generated an electric video signal through the conversion;
a connector section for outputting the video signal generated by the imaging device; and
a planar member for fixing thereonto the imaging device, the planar member having a thickness ranging from about 1 mm to 2 mm.

14. A planar substrate, characterized by further including an interface for communicating a signal outputted from an optical camera section including a lens, a shutter, and a button for the shutter.

15. A cylindrical container, characterized by comprising:
a circuit section including a storage circuit for storing therein an electric video signal;
a connector section for inputting the video signal; and
a cylindrical member having a diameter equivalent to that of a 135-type film cartridge stipulated by JIS K 7519 and a height ranging from 37 mm to 47 mm.

16. A cylindrical container according to Claim 15, characterized by further including an interface for communicating a signal outputted from an optical camera section including a lens, a shutter, and a button for the shutter.

17. An optical camera characterized by comprising:
an optical camera section including a lens, a shutter, and a button for the shutter;
a housing section capable of housing therein a 135-type film cartridge stipulated by JIS K 7519 and a cylindrical container integrally including a circuit section including a storage circuit for storing therein video signals, the cylindrical container having a diameter equivalent to that of the film cartridge and a height ranging from 37 mm to 47 mm; and
a terminal for outputting a signal generated by the optical camera section, the signal controlling the circuit section in the cylindrical container when the cylindrical container is housed in the housing section.

18. An optical camera according to Claim 17, characterized in that the signal generated by the optical camera section is a signal related to the shutter.

19. An optical camera according to Claim 17, characterized by further including a film winding section, the section being expandable and contractible.

20. A video signal processor for achieving a photo-electric conversion for an optical image attained from the optical camera section including a lens, a shutter, and a button for the shutter and memorizing an electric video signal generated through the conversion, characterized by comprising:
a cylindrical member having a diameter equivalent to that of a 135-type film cartridge stipulated by JIS K 7519 and a height ranging from 37 mm to 47 mm;
a rear cover section to be opened and closed for respectively attaching and removing the cylindrical member;
an imaging device having an imaging surface and being attached onto the rear cover section such that the imaging surface is positioned at a focusing plane of the lens, the device conducting a photo-electric conversion for the optical image and thereby generating an electric video signal; and
a circuit section housed in the cylindrical member, the circuit section including a camera signal processing circuit for processing video signals generated by the imaging device and a video compressing circuit for compressing the video signals; and
means for electrically connecting the circuit section to the imaging device.

21. A video signal processor according to Claim 20, characterized by including a connector section in the rear cover section, the connector section connecting and keeping a card-type recording media for storing therein the video signals.

22. A video signal processor according to Claim 21, characterized in that the card-type recording media is a memory card integrally including a semiconductor memory.

23. A video signal processor according to Claim 20, characterized in that the circuit section includes a storage circuit for storing therein the video signals compressed by the video compressing circuit.

24. A video signal processor for achieving a photo-electric conversion for an optical image attained from the optical camera section including a lens, a shutter, and a button for the shutter and memorizing an electric video signal generated through the conversion, characterized by comprising:
a member including a planar portion and a cylindrical portion, the member having an outer contour equivalent to that of a 110-sized cartridge stipulated by JIS K 7563;
an imaging device attached onto the planar portion such that an imaging surface thereof is positioned at a focusing plane of the lens, the device conducting a photo-electric conversion for the optical image and thereby generating an electric video signal; and
a circuit section housed in the cylindrical portion to be electrically connected to the imaging device fixed onto the planar member, the section including a storage circuit for storing therein the video signal generated from the imaging device.

25. An optical image converter for achieving a photo-electric conversion for an optical image and memorizing an electric video signal generated through the conversion, characterized by comprising:
a member including a cylindrical a planar portion and a cylindrical portion, the member having an outer contour equivalent to that of a 110-sized cartridge stipulated by JIS K 7563;
an imaging device attached onto the planar portion such that an imaging surface thereof is positioned at a focusing plane of the lens, the device conducting a photo-electric conversion for the optical image and thereby generating an electric video signal; and
a circuit section housed in the cylindrical portion to be electrically connected to the imaging device fixed onto the planar member, the section including a storage circuit for storing therein the video signal generated from the imaging device.

26. A video signal processor for achieving a photo-electric conversion for an optical image attained from the optical camera section including a lens, a shutter, and a button for the shutter and memorizing an electric video signal generated through the conversion, characterized by comprising:
a member including a planar portion and a cylindrical portion, the member having an outer contour equivalent to that of a 110-sized cartridge stipulated by JIS K 7563;
an imaging device attached onto the planar portion such that an imaging surface thereof is positioned at a focusing plane of the lens, the device conducting a photo-electric conversion for the optical image and thereby generating an electric video signal;
a circuit section housed in the cylindrical portion to be electrically connected to the imaging device fixed onto the planar member, the section processing the video signal generated from the imaging device;
a rear cover section to be opened and to be closed for respectively attaching and removing the cylindrical member, the rear cover section including a housing section for housing therein a storage section to store therein the video signal; and
connector means for electrically connecting the storage section housed in the housing section to the circuit section.

27. A video signal processor according to Claim 26, characterized in that the circuit section includes a storage circuit for storing therein the video signal.
